# EUROPEAN PATENT APPLICATION

(11) **EP 4 506 161 A1**
(43) Date of publication of application: **12.02.2025**
(21) Application number: 24189587.9
(22) Date of filing: 18.07.2024
(51) Int. Cl.: B32B 18/00, C04B 35/52, C04B 35/83, C04B 38/00

(54) **POROSITY GRADIENT PREFORM ARCHITECTURE FOR HIGH TEMPERATURE COMPOSITES**

(30) Priority: 21.07.2023 US 202318356984
(71) Applicant: Rohr, Inc., Chula Vista, CA 91910-2098 (US)
(72) Inventor: THAI, Bryan, Poway (US); PUJAR, Vijay V., San Diego (US); WAUGH, Katherine E., Coronado (US); KOROLY, Christopher C., Spring Valley (US)
(74) Representative: Dehns

(57) **Abstract**

A porosity gradient fibrous preform (100) includes a first fabric-resin layer (102) having a first plurality of fibers (112) and a first resin (114a) and a second fabric-resin layer having a second plurality of fibers (112) and a second resin (114b), the second fabric-resin layer (104) being positioned further outward from a center of the porosity gradient fibrous preform (100) than the first fabric-resin layer (102). The first resin (114a) is different from the second resin (114b) so as to generate sequentially increasing porosity in the preform prior to a CVI densification step. The sequentially increasing porosity can be achieved, for example, by selecting resins for each layer with sequentially increasing moisture content, by selecting resins for each layer with sequentially decreasing char yield, and/or adding black carbon powder to interior located fabric-resin layers.

## Description

### FIELD

The present invention relates generally to apparatus, systems, and methods of manufacture for composite preform components and, more particularly, to a fibrous preform architecture for high temperature composites.

### BACKGROUND

Shaped composite bodies are utilized in aerospace applications. Various systems and methods are known in the art for forming a preform into a shaped composite body. In typical high temperature composite manufacturing, a dry fabric may be used to make a preform. The dry preform is then densified using gas infiltration. There are many variables that determine the success of the densification stage, including the number of available pathways for the gas to infiltrate uniformly into the center of the preform.

### SUMMARY

According to an aspect of the present invention, a porosity gradient fibrous preform is provided. The porosity gradient fibrous preform includes a first fabric-resin layer having a first plurality of fibers and a first resin, and a second fabric-resin layer having a second plurality of fibers and a second resin. The second fabric-resin layer is positioned further outward from a center of the porosity gradient fibrous preform than the first fabric-resin layer. The first resin is different from the second resin.

In various embodiments, the first resin is configured to be pyrolyzed to generate a first porosity in the first fabric-resin layer and the second resin is configured to be pyrolyzed to generate a second porosity in the second fabric-resin layer, the second porosity being greater than the first porosity. In various embodiments, the porosity gradient fibrous preform further comprises a third fabric-resin layer having a third plurality of fibers and a third resin, the third fabric-resin layer being positioned further outward from the center of the porosity gradient fibrous preform than the second fabric-resin layer, wherein the third resin is configured to be pyrolyzed to create a third porosity, and wherein the third porosity is greater than the second porosity.

In various embodiments, the porosity gradient fibrous preform further comprises a first carbon powder mixed with the first resin, and the first carbon powder and the first resin are configured to be pyrolyzed to generate the first porosity. In various embodiments, the porosity gradient fibrous preform further comprises a second carbon powder mixed with the second resin, and the second carbon powder and the second resin is configured to be pyrolyzed to generate the second porosity.

In various embodiments, at least a portion of the first resin and at least a portion of the second resin are configured to be pyrolyzed from the porosity gradient fibrous preform to create a path through the porosity gradient fibrous preform for infiltration of a fluid. In various embodiments, the fluid infiltration includes chemical vapor infiltration.

In various embodiments, a char yield of the first resin is greater than a char yield of the second resin.

In various embodiments, a fiber volume of the first fabric-resin layer is equal to that of the second fabric-resin layer, and the percentage of the fiber volume is at least 25% by volume of the porosity gradient fibrous preform.

In various embodiments, the resin comprises of at least one of a thermoplastic or a thermoset resin.

According to an aspect of the present invention, a manufacturing method is provided. The manufacturing method includes forming a porosity gradient fibrous preform by arranging a plurality of fabric-resin layers, each comprising a plurality of fibers and a resin, wherein a fiber volume of the plurality of fibers for each fabric-resin layer is uniform throughout the plurality of fabric-resin layers, and pyrolyzing the resin to create a sequentially increasing porosity from a center of the porosity gradient fibrous preform toward an outer surface of the porosity gradient fibrous preform.

In various embodiments, the manufacturing method further comprises pyrolyzing the resin from the porosity gradient fibrous preform to create a path through the porosity gradient fibrous preform for infiltration of a fluid.

In various embodiments, after pyrolyzing the resin from the porosity gradient fibrous preform, a porosity of the porosity gradient fibrous preform sequentially increases from the center of the porosity gradient fibrous preform toward the outer surface of the porosity gradient fibrous preform.

In various embodiments, the manufacturing method further comprises mixing a carbon powder with the resin, a volume of the carbon powder decreases from the center of the porosity gradient fibrous preform toward the outer surface of the porosity gradient fibrous preform.

In various embodiments, a composition of the resin various among the plurality of fabric-resin layers.

In various embodiments, arranging the plurality of fabric-resin layers includes positioning a second fabric-resin layer over a first fabric-resin layer having a first portion of the plurality of fibers and a first portion of the resin, the second fabric-resin layer having a second portion of the plurality of fibers and a second portion of the resin, the second fabric-resin layer being positioned further outward from the center of the porosity gradient fibrous preform than the first fabric-resin layer.

In various embodiments, the first portion of the resin has a composition that is different from that of the second portion of the resin.

In various embodiments, the percentage of the fiber volume is at least 25% by volume of the porosity gradient fibrous preform.

In various embodiments, the first portion of the resin includes a polyamide and the second portion of the resin includes at least one of an epoxy, a bismaleimide, and a phenolic.

According to an aspect of the present invention, a manufacturing method is provided. The manufacturing method includes forming a porosity gradient fibrous preform by arranging a plurality of fabric-resin layers, each comprising a plurality of fibers and a resin, mixing a carbon powder with the resin, a volume of the carbon powder decreases from a center of the porosity gradient fibrous preform toward the outer surface of the porosity gradient fibrous preform, and pyrolyzing the resin from the porosity gradient fibrous preform to create a sequentially increasing porosity from the center of the porosity gradient fibrous preform toward an outer surface of the porosity gradient fibrous preform. A fiber volume of the plurality of fibers for each fabric-resin layer is uniform throughout the plurality of fabric-resin layers.

The present invention may include any one or more of the individual features disclosed above and/or below alone or in any combination thereof.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 illustrates a porosity gradient fibrous preform using fiber fabric layers having different resins, in accordance with various embodiments.
FIG. 2 illustrates a resin undergoing a curing step and forming a plurality of pores, in accordance with various embodiments.
FIG. 3 illustrates a resin undergoing a pyrolysis step and forming a plurality of pores, in accordance with various embodiments.
FIG. 4 illustrates a resin mixed with a black carbon powder, in accordance with various embodiments.
FIG. 5 illustrates a method of forming a porosity gradient fibrous preform for a high temperature composite, in accordance with various embodiments.
FIG. 6 illustrates a micro cross-section picture of a porosity gradient fibrous preform, in accordance with various embodiments.
FIG. 7 illustrates a schematic view a pore of a porosity gradient fibrous preform during a Chemical Vapor Infiltration (CVI) process, in accordance with various embodiments.
FIG. 8 illustrates a micro cross-section picture of a porosity gradient fibrous preform, in accordance with various embodiments.
FIG. 9 illustrates a micro cross-section picture of a porosity gradient fibrous preform, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the invention, it should be understood that other embodiments may be realized and that changes may be made without departing from the scope of the invention. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an," or "the" may include one or more than one and that reference to an item in the singular may also include the item in the plural. Further, all ranges may include upper and lower values and all ranges and ratio limits disclosed herein may be combined.

Various systems and methods are known in the art for generating a fibrous preform for carbon-carbon composites. In typical carbon-carbon manufacturing, a fibrous preform may be manufactured and this fibrous preform may then be densified using gas infiltration. There are many variables that determine the success of the densification stage, including the number of available pathways for the gas to infiltrate uniformly into the center of the fibrous preform. Typically, fiber volume and lack of adequate gas flow paths inhibit uniform densification and yield a component with greater than 10 percent porosity.

Disclosed herein are systems and methods for a porosity gradient fibrous preform architecture for high temperature composites that provides numerous pathways for fluids, i.e. uniform gas, infiltration into the center of the porosity gradient fibrous preform during densification. In various embodiments, resins of various char yields are disposed into fabric layers of, for example, woven fabric layers, non-crimp fabric layers, such as unidirectional or stitched unidirectional, or felt fabric layers. In various embodiments, resins of various types and/or compositions are disposed into fabric layers of the porosity gradient preform. In various embodiments, a black carbon powder is mixed with resin in sequentially decreasing amounts within interior fabric-resin layers of the porosity gradient preform. A fibrous preform of the present invention includes several fiber-resin layers and features a porosity gradient wherein the preform has a lower porosity at the center of the preform and sequentially higher porosity in a direction away from the center of the preform toward the outer surface of the preform. The gradient may be generated by a size of pores or a number of pores or both. The pores are interconnected to provide a path for subsequent infiltration. Low porosity implies the space is occupied by a non-porous material-e.g., fiber or resin.

As used herein, a fusible fiber is comprised of one or more polymers with a combined char yield of 25% elemental carbon or greater by weight and a residual mass of less than 1% by weight. As used herein, a fugitive fiber is comprised of one or more polymers with a combined char yield of 5% elemental carbon or less by weight, and a residual mass of less than 1% by weight. As used herein, char yield is defined as the weight of the carbon remaining expressed as a percentage of the total starting weight of the fiber or resin when the fiber material or resin material is heated (or pyrolyzed) in an inert atmosphere (e.g., nitrogen or argon) at temperatures of up to about 1000 degrees Celsius (about 1832 degrees Fahrenheit). As used herein, residual mass is defined as the weight of the fiber remaining expressed as a percentage of the total weight of the starting fiber when the fiber material is heated (or oxidized) in an oxidizing atmosphere (e.g., air, or oxygen) at temperatures of up to about 1000 degrees Celsius (about 1832 degrees Fahrenheit). It should be noted that while a residual mass of 1% or less is preferred in the production of carbon-carbon composite structures for high temperature applications, a residual mass of greater than 1% may be acceptable for certain lower temperature applications or in applications where the excessive residual mass and the associated residues do not adversely impact performance.

In various embodiments, the fabric layers may be stacked, in a near net shape tool, with each successive layer containing the desired resin char yield thereby forming a porosity gradient fibrous preform. In various embodiments, the resin type and/or composition may be varied such that interior plies of the porosity gradient fibrous preform may contain one or more types of resins that results in a relatively low porosity while the exterior plies of the porosity gradient fibrous preform may conversely contain one or more different types of resins that result in a relatively higher porosity. In various embodiments, during stacking, the fabric layers may be tacked together using a variety of methods, e.g., an adhesive tackifier, a hot iron to locally melt a binder, among others. In various embodiments, as the porosity gradient fibrous preform is stacked, the various fabric layers may be joined through thickness reinforcement (TTR) via needling, tufting, stitching, or z-pinning, using a TTR fiber thread that includes fugitive fibers, fusible fibers, and/or carbon fibers. In various embodiments, once all the fabric layers are stacked, then all the fabric layers are needled, tufted, stitched, or z-pinned together. In various embodiments, as each successive fabric layer is added, then the fabric layers may be needled, tufted, stitched, or z-pinned together. In various embodiments, the needling, tufting, stitching, or z-pinning may penetrate all the fabric layers. In various embodiments, the needling, tufting, stitching, or z-pinning may penetrate only a predefined number of fabric layers. In various embodiments, a number of fabric layers that are needled, tufted, stitched, or z-pinned may vary as the porosity gradient fibrous preform is generated. In various embodiments, once the porosity gradient fibrous preform is completely stacked and needled, the porosity gradient fibrous preform may be placed in a close die mold or vacuum bag tooling and subjected to heat and pressure to consolidate the porosity gradient fibrous preform.

In various embodiments, once consolidation is complete, the porosity gradient fibrous preform may undergo pyrolysis, or heat-treatment in an inert environment (pyrolysis may be alternatively referred to as pyrolyzation), where the resin in the matrix is burned and/or evaporated, leaving behind a carbon char in the matrix to form a porosity gradient preform. In various embodiments, once pyrolysis is complete, the porosity gradient fibrous preform may undergo CVI densification. In various embodiments, once the CVI densification is complete, the porosity gradient fibrous preform may undergo skim cut machining where the surface of the porosity gradient fibrous preform is modified to meet a set of standards for the porosity gradient fibrous preform. In various embodiments, the pyrolysis, CVI densification and skim cutting may be repeated until a desired part density is reached. In various embodiments, once the desired part density is reached, a final machining may be performed on the porosity gradient fibrous preform to meet desired porosity gradient fibrous preform dimensions.

In various embodiments, once the resin is cured, the porosity gradient fibrous preform may undergo pyrolysis where the resin in the matrix is burned and/or evaporated, and the remaining carbon in the matrix forms a porosity gradient preform. In various embodiments, once pyrolysis is complete, the porosity gradient fibrous preform may undergo further densification via CVI densification. In various embodiments, once the CVI densification is complete, the porosity gradient fibrous preform may undergo skim cut machining where the surface of the porosity gradient fibrous preform is modified to meet a set of standards for the porosity gradient fibrous preform. In various embodiments, at least one of polymer infiltration, the pyrolysis, CVI densification and skim cutting may be repeated until a desired part density is reached. In various embodiments, once the desired part density is reached, a final machining may be performed on the porosity gradient fibrous preform to meet desired porosity gradient fibrous preform dimensions.

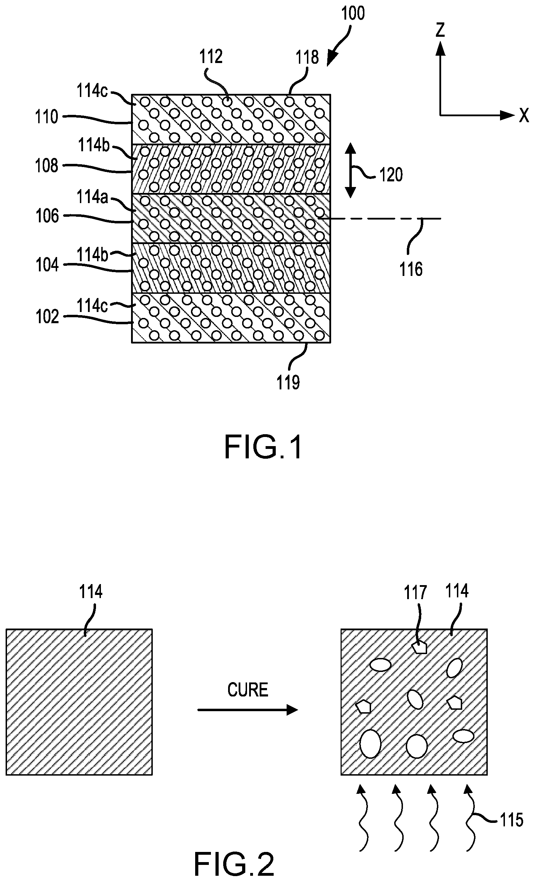

With reference to FIG. 1, in accordance with various embodiments, a porosity gradient fibrous preform 100 using fabric-resin layers having different resins that result in sequentially increasing porosities after being cured and/or undergoing pyrolysis is illustrated. In various embodiments, as illustrated in FIG. 1, each of the fabric layers 102, 104, 106, 108, and 110 can have consistent volumes of fibers 112 (e.g., carbon fibers). Stated differently, a fiber volume of the plurality of fibers 112 for each fabric-resin layer 102, 104, 106, 108, and 110 is uniform throughout the porosity gradient fibrous preform 100. In various embodiments, fiber volume is greater than 10% of the total volume of the preform 100. In various embodiments, fiber volume is greater than 25% of the total volume of the preform 100. In various embodiments, fiber volume can be between 30% and 50% for carbon-carbon or ceramic matrix composites, and up to 60% for thermoset composites. Each of the fabric layers 102, 104, 106, 108, and 110 include a resin (e.g., fabric layer 106 includes a first resin 114a, fabric layer 104 and fabric layer 108 include a second resin 114b, and fabric layer 102 and fabric layer 110 include a third resin 114c; collectively referred to herein as resin 114). In this regard, each of the fabric layers 102, 104, 106, 108, and 110 can be referred to herein as fabric-resin layers. Stated differently, each of the fabric layers 102, 104, 106, 108, and 110 include a plurality of fibers 112 and a resin 114. Each of the fabric layers 102, 104, 106, 108, and 110 can include the plurality of fibers 112 preimpregnated with the resin 114 (i.e., the fibers 112 can be wetted with the resin 114 prior to the layers being stacked). Stated differently, each of the fabric layers 102, 104, 106, 108, and 110 can be made of a composite prepreg ply. The resin 114, in accordance with various embodiments, can be a thermoset resin such as a phenolic resin, an epoxy resin, a vinyl ester resin, a polyester resin, a polyimide resin, a benzoxazine resin, a cyanate ester resin, or a bismaleimide (BMI) resin, among others. The resin 114 in each of the fabric-resin layers 102, 104, 106, 108, and 110 can have a char yield of 25% elemental carbon or greater by weight.

In various embodiments, the type and/or composition of the resins 114 can sequentially vary with each fabric-resin layer from the centerline 116 toward outer surface 118 and outer surface 119 along the thickness direction 120. For example, the type and/or composition of each resin 114 can be selected so that, upon being cured and/or undergoing pyrolysis, the resins create a sequentially increasing porosity to create a path through the porosity gradient fibrous preform 100 for infiltration of a fluid, as described in further detail herein. Stated differently, a type and/or composition of the resin 114 is selected so that the porosity sequentially increases from a center of the porosity gradient fibrous preform 100 toward an outer surface (e.g., outer surface 118 and/or outer surface 119) of the porosity gradient fibrous preform 100. In this manner, a porosity of the resin 114, after being cured and/or undergoing pyrolysis, corresponds with a position of the resin 114 with respect to centerline 116 (i.e., increasing porosity with distance of the resin 114 from the centerline 116). In various embodiments, a moisture content of the resin sequentially increases with each fabric-resin layer from the centerline 116 toward outer surface 118 and outer surface 119 along the thickness direction 120.

In various embodiments, when heated to a cure temperature and/or a pyrolysis temperate, the moisture in the resin 114 tends to create bubbles in the resin 114, thereby increasing porosity. In this regard, the higher the moisture content, the greater the porosity of the cured resin 114 when subjected to the cure temperature and/or the pyrolysis temperature. Moisture content can be determined using a gravimetric moisture analyzer, wherein the moisture content is expressed as a weight percentage of the resin.

In various embodiments, resin 114a (also referred to herein as a first resin) includes a polyamide resin, such as a dimer acid-based (DAB) polyamide or a polyamide-epichlorohydrin (PAE) resin. In various embodiments, resin 114b (also referred to herein as a second resin) includes an epoxy resin and/or a bismaleimide (BMI) resin. In various embodiments, resin 114c (also referred to herein as a third resin) includes a phenolic resin. By increasing the moisture content of the resin 114 near the exterior of the porosity gradient fibrous preform 100, a porosity of the porosity gradient fibrous preform 100 increases near the exterior of the porosity gradient fibrous preform 100 to thereby allow a fluid to infiltrate the interior of the porosity gradient fibrous preform 100 during a CVI process, as described herein, and thereby achieve more uniform and/or increased part density.

FIG. 2 illustrates a resin 114 undergoing a curing step by applying heat-illustrated by arrows 115-to the resin 114 which creates a byproduct (e.g., moisture) that separates from the resin 114 and creates pores 117 or pockets in the resin, thereby increasing the porosity of the resin 114. The porosity of the resin 114 can vary with the type or composition of the resin 114, such that resins with higher porosity at the curing stage (i.e., in response to being heated to a curing temperature) can be chosen to be closer to the exterior of the porosity gradient fibrous preform 100. In general, resins with higher moisture content result in higher porosity at the curing stage.

Having described various apparatus, systems, and methods for varying resin type and/or composition to generate pores within the resin 114, it is further contemplated that porosity of the resin 114 can be selected based upon the char yield of the resin 114. In this regard, with reference again to FIG. 1, resin 114a can be selected to have a char yield which is greater than the char yield of resin 114b. Resin 114b can be selected to have a char yield which is greater than the char yield of resin 114c. In this regard, resin 114a, resin 114b, and/or resin 114c can include a phenolic resin, an epoxy resin, a polyamide resin, or a BMI resin.

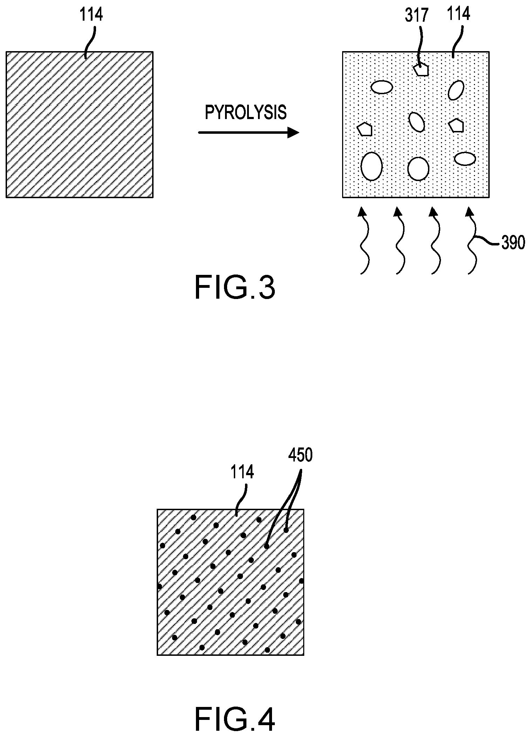

FIG. 3 illustrates a resin 114 undergoing a pyrolysis step by applying heat-illustrated by arrows 390-to the resin 114 where a portion of the resin 114 is burned, melted, or evaporated (thereby creating pores 317), and the remaining portion of the resin 114 is pyrolyzed into a carbon matrix to create a path (i.e., with the pores 317) through the thickness of the porosity gradient fibrous preform for infiltration of fluids. The porosity of the carbon matrix (i.e., the pyrolyzed resin) is determined by the char yield of the resin 114. Accordingly, the char yield of the resin 114 can be selected to create a sequentially increasing porosity in a direction from the center of the preform outward.

It is further contemplated that porosity of the resin 114 can be selectively varied by adding a carbon powder to the resin. With reference to FIG. 4, resin 114 is illustrated having a black carbon powder 450 mixed therewith. The carbon powder 450 can have a char yield of 100% (or nearly 100%). In this regard, adding carbon powder 450 to the resin 114 increases a char yield of the resin mixture, thereby decreasing a porosity of the pyrolyzed resin matrix. In this regard, with additional reference to FIG. 1, carbon powder 450 can be mixed with the interior located resins 114. For example, carbon powder 450 can be mixed with resin 114a. Carbon powder 450 can further be mixed with resin 114b. Resin 114b can include less carbon powder 450 than resin 114a. In various embodiments, resin 114a and resin 114b can be the same resin, but with different amounts of carbon powder 450 so that the char yield of resin 114b is less than the char yield of resin 114a. In various embodiments, resin 114a and resin 114b are different types of resin, and further having different amounts of carbon powder 450 so that the char yield of resin 114b is less than the char yield of resin 114a. In various embodiments, resin 114a and resin 114b are mixtures of different types of resins having different char yields, wherein the ratios of these resins are selected so that the char yield of resin 114b is less than the char yield of resin 114a. For example, the resins 114 can be a mixture of fusible resin and fugitive resin, where the ratio of fugitive resin to fusible resin sequentially increases with the distance of each fabric-resin layer away from centerline 116.

Although illustrated as having five fabric layers 102, 104, 106, 108, and 110, it should be understood that any number of fabric layers can be used to form the fibrous preform 100, so long as the fabric layers are chosen to have increasing porosity from the centerline 116 toward the outer surface 118. In various embodiments, once the desired number of layers has been reached for the preform ply stack, fabric layers 102, 104, 106, 108, and 110 may be joined through thickness reinforcement (TTR) via external needling, tufting, stitching, or z-pinning, among others. In various embodiments, the TTR utilizes a TTR fiber thread that includes fugitive fibers, fusible fibers, and/or carbon fibers. In various embodiments, the TTR is performed in a uniform manner such that a number of needles, tufts, stiches, or z-pins are consistent along a length of the fabric layers 102, 104, 106, 108, and 110 in the x-direction. In various embodiments, a transport depth in the z-direction of the TTR is through all the fabric layers 102, 104, 106, 108, and 110 of the porosity gradient fibrous preform for the length of the porosity gradient fibrous preform in the x-direction. In various embodiments, generating a TTR fibrous preform in this manner takes advantage of random fiber placement for uniform densification in the through thickness direction, while maintaining high in-plane strengths.

In various embodiments, each fabric layer 102, 104, 106, 108, and 110 has a directionality that coincides with the direction of the fibers 112. The directionality of adjacent fabric layers (e.g., fabric layer 106 and fabric layer 108) can be the same, in accordance with various embodiments. The directionality of adjacent fabric layers (e.g., fabric layer 106 and fabric layer 108) can differ, in accordance with various embodiments

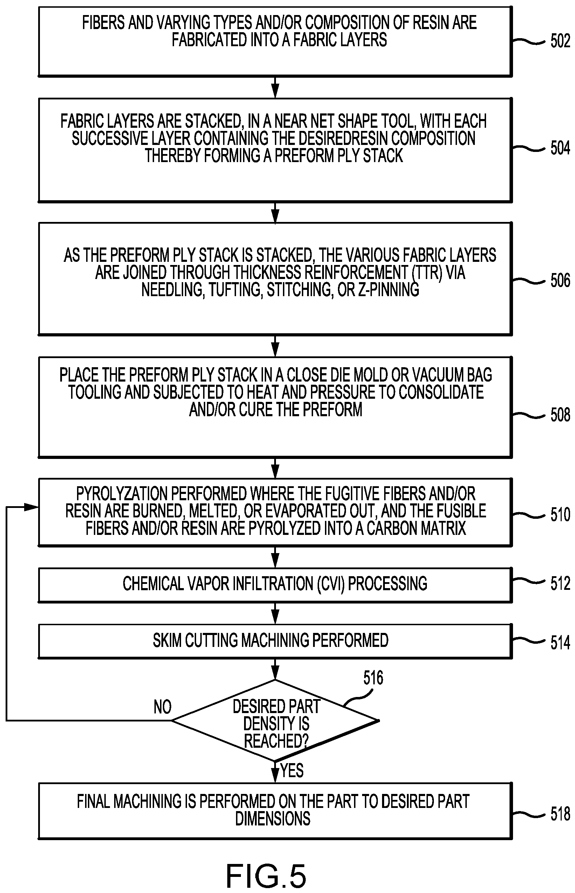

Referring now to FIG. 5, in accordance with various embodiments, a method of forming a porosity gradient fibrous preform for a high temperature composite is illustrated. At block 502, fabric-resin layers using uniform fiber volume and varying types and/or compositions of resin are fabricated into a fabric-resin layers of either woven fabric layers, non-crimp fabric layers, such as unidirectional or stitched unidirectional, or felt fabric layers. At block 504, the fabric-resin layers are stacked, in a near net shape tool, with each successive layer containing the desired resin type and/or composition thereby forming a porosity gradient fibrous preform. At block 506, as the porosity gradient fibrous preform is stacked, the various fabric layers may be joined through thickness reinforcement (TTR) via needling, tufting, stitching, or z-pinning, using a TTR fiber thread that includes fugitive fibers, fusible fibers, and/or carbon fibers. It should be understood that the TTR step at block 506 is optional and can be omitted in various embodiments. At block 508, once the porosity gradient fibrous preform is completely stacked (and needled if desired), the porosity gradient fibrous preform may be placed in a close die mold or vacuum bag tooling and subjected to heat and pressure to consolidate the porosity gradient fibrous preform. In various embodiments, the resin in the porosity gradient fibrous preform may be cured (e.g., during or after consolidation) by applying heat and pressure to the resin 114. The porosity gradient fibrous preform can be heated to a cure temperature of between 93°C (200°F) and 121 °C (250°F); though the cure temperature can vary depending on the composition of the resin 114. For example, various thermoset resins may have a cure temperature of between 260°C (500°F) and 371 °C (700°F). In this regard, it should be understood that the cure temperate is chosen depending on the type of resin used. Accordingly, the porosity gradient fibrous preform can be heated to a cure temperature of between 93°C (200°F) and 371°C (700°F), in accordance with various embodiments. After being cured, the resin 114 can be polymerized (i.e., the resin includes monomers before being cured and includes polymers after being cured). In various embodiments, different types and/or compositions of resins are used for different layers of the ply stack, as described herein, to achieve increasing porosity from the interior toward the exterior of the preform, thereby creating paths for receiving a fluid during the CVI densification step.

At block 510, once consolidation is complete, the porosity gradient fibrous preform undergoes pyrolysis where a portion of the resin and/or fugitive fibers (if any fugitive fibers exist) in the porosity gradient fibrous preform are burned, melted, or evaporated, and the remaining portion of the resin and the fusible fibers are pyrolyzed into a carbon matrix and create a path through the thickness of the porosity gradient fibrous preform for infiltration of fluids. Subsequent to pyrolysis, the weight ratio percentage of the resin 114 (which at this point is carbon char (i.e., carbon)) in fabric layer 106 can be between 30% and 50%, between 35% and 45%, between 37% and 43%, or between 35% and 50%, in accordance with various embodiments. In various embodiments, the weight ratio percentage of the resin 114 (which at this point is carbon char (i.e., carbon)) in fabric layer 104 and/or fabric layer 108 is between 25% and 40%, between 28% and 38%, or between 30% and 35%, in accordance with various embodiments. In various embodiments, the weight ratio percentage of the resin 114 (which at this point is carbon char (i.e., carbon)) in fabric layer 102 and/or fabric layer 110 is between 20% and 35%, between 20% and 30%, or between 20% and 28%, in accordance with various embodiments.

At block 512, once pyrolysis is complete, the porosity gradient fibrous preform may undergo CVI densification. At block 514, once the CVI densification is complete, the porosity gradient fibrous preform may undergo skim cut machining where the surface of the porosity gradient fibrous preform modified to meet a set of standards for the porosity gradient fibrous preform. At block 516 a determination is made as to whether a desired part density is reached. If at block 516 the desired part density has not been reached, the operation returns to block 510. If at block 516 the desired part density has been reached, then, at block 518, a final machining may be performed on the porosity gradient fibrous preform to meet desired porosity gradient fibrous preform dimensions.

Therefore, the illustrative embodiments provide for the creation of complex contour fibrous preforms, with a variety of thicknesses, which take advantage of porosity gradient created by varying resin type and/or composition. The porosity gradient preform construction of the present invention tends to improve part quality and make the CVI process more effective. The porosity gradient tends to enable higher densification yields in thick sections or complex contour geometries.

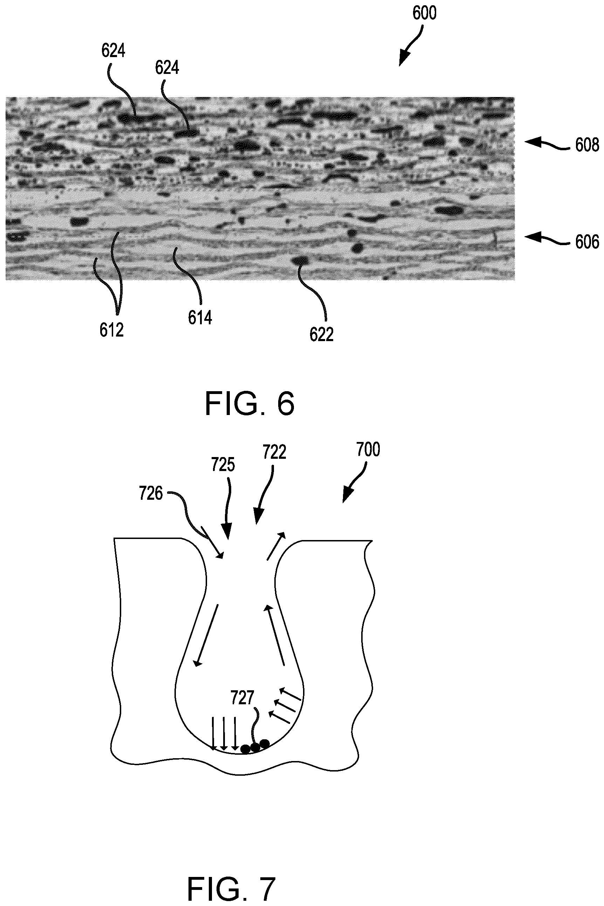

With reference to FIG. 6, a micro cross-section picture of a porosity gradient fibrous preform 600 manufactured using the systems and methods of the present invention (before undergoing CVI) is illustrated having uniform fiber volume and also having a porosity gradient. Porosity gradient fibrous preform 600 includes a carbon or ceramic matrix 614 reinforced with carbon or reinforcement fibers 612. The carbon or ceramic matrix 614 can be the product of a resin (e.g., see resin 114 of FIG. 1) after undergoing curing and pyrolysis. The carbon fibers 612 can be the product of the fibers (e.g., see fibers 112 of FIG. 1) after undergoing pyrolysis. Due to the varying types and/or composition of the resin in the layers of the porosity gradient preform, a porosity of a first carbonized fabric-resin layer 606 near a center of the preform is less than a porosity of a second carbonized fabric-resin layer 608 near an outer surface of the preform. Stated differently, layer 608 includes a first plurality of pores 624 that create one or more paths through the porosity gradient fibrous preform for infiltration of a fluid (e.g., a fluid used during CVI for densification). Layer 606 includes a second plurality of pores 622 that create one or more paths through the porosity gradient fibrous preform for infiltration of a fluid (e.g., a fluid used during CVI for densification). The pores 624 can be in fluid communication with the pores 622 whereby a network of paths are created for receiving a fluid used during CVI densification. A volume of the first plurality of pores 624 is greater than a volume of the second plurality of pores 622. Stated differently, the layer 606 is less porous than the layer 608.

With momentary reference to FIG. 7, a portion of a porosity gradient fibrous preform 700 is illustrated during a CVI process. The porosity gradient fibrous preform 700 has a pore 722 defining a path 725 for a fluid-illustrated by the arrows 726-to infiltrate the porosity gradient fibrous preform 700. Accordingly, the pores are interconnected across the fabric-resin layers such that, in response to the resin being pyrolyzed, the path 725 is created through the fabric-resin layers to allow a fluid (e.g., a CVI gas) to infiltrate through the thickness (e.g., the entire thickness) of the porosity gradient fibrous preform 700. The fluid 726 can be a hydrocarbon gas configured to infiltrate the preform at elevated temperatures (e.g., approximately 1000°C (1832°F), wherein the term "approximately in this regard means ±200°C (between 1472°F-2192°F)), whereby carbon 727 from the hydrocarbon gases separate from the gas and is deposited on and within the porosity gradient fibrous preform 700. In this regard, it should be appreciated that the increased porosity located near the outside surface of the porosity gradient fibrous preform results in additional paths whereby the fluid (e.g., hydrocarbon gases) can reach the interior of the porosity gradient fibrous preform to deposit carbon. As the porosity of the porosity gradient fibrous preform is decreased in the interior of the porosity gradient fibrous preform due to the deposited carbon during CVI, the fluid continues to fill the pores located near the outside surface of the porosity gradient fibrous preform, similarly decreasing porosity near the exterior of the porosity gradient fibrous preform, thereby resulting in an overall uniformly higher density carbon-carbon component than if the porosity gradient had not existed in the first place. Stated differently, and with momentary additional reference to FIG. 6, during CVI, the pores 624 are not filled (or otherwise clogged from allowing CVI gasses to infiltrated the interior of the porosity gradient fibrous preform) with carbon deposited by the CVI fluid 726 until after the interior of the porosity gradient fibrous preform reaches a desired density. In this manner, the porosity gradient fibrous preform allows for uniform densification by providing additional and/or larger pathways for the CVI gasses to reach the interior of the porosity gradient fibrous preform.

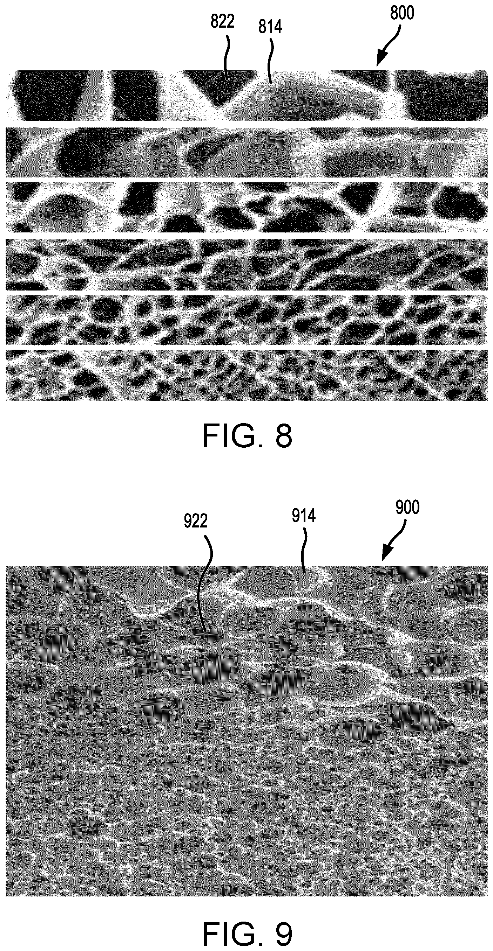

With reference to FIG. 8, a micro cross-section picture of a high temperature composite preform 800 manufactured using the systems and methods of the present invention (before undergoing CVI) is illustrated having uniform fiber volume and also having a porosity gradient. Preform 800 includes a plurality of layers of varying porosities. Preform 800 includes a carbon matrix 814 defining a plurality of pores 822.

With reference to FIG. 9, a micro cross-section picture of a high temperature composite 900 manufactured using the systems and methods of the present invention (before undergoing CVI) is illustrated having uniform fiber volume and also having a porosity gradient. Preform 900 includes a plurality of layers of varying porosities. Preform 900 includes a carbon matrix 914 defining a plurality of pores 922.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the invention. The scope of the invention is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the invention in alternative embodiments.

Numbers, percentages, or other values stated herein are intended to include that value, and also other values that are about or approximately equal to the stated value, as would be appreciated by one of ordinary skill in the art encompassed by various embodiments of the present invention. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about," or "approximately" as used herein represent an amount close to the stated amount that still performs a desired function or achieves a desired result. For example, the term "substantially," "about," or "approximately" may refer to an amount that is within 10% of, within 5% of, within 1% of, within 0.1% of, and within 0.01% of a stated amount or value.

Furthermore, no element, component, or method step in the present invention is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this invention. Accordingly, the description is not intended to be exhaustive or to limit the principles described or illustrated herein to any precise form. Many modifications and variations are possible in light of the above teaching.

## Claims

1. A porosity gradient fibrous preform comprising:
a first fabric-resin layer having a first plurality of fibers and a first resin;
a second fabric-resin layer having a second plurality of fibers and a second resin, the second fabric-resin layer being positioned further outward from a center of the porosity gradient fibrous preform than the first fabric-resin layer; and
the first resin is different from the second resin.

2. The porosity gradient fibrous preform of claim 1, wherein the first resin is configured to be pyrolyzed to generate a first porosity in the first fabric-resin layer and the second resin is configured to be pyrolyzed to generate a second porosity in the second fabric-resin layer, the second porosity being greater than the first porosity.

3. The porosity gradient fibrous preform of claim 2, further comprising a first carbon powder mixed with the first resin, and the first carbon powder and the first resin are configured to be pyrolyzed to generate the first porosity.

4. The porosity gradient fibrous preform of claim 3, further comprising a second carbon powder mixed with the second resin, and the second carbon powder and the second resin is configured to be pyrolyzed to generate the second porosity.

5. The porosity gradient fibrous preform of any preceding claim, wherein at least a portion of the first resin and at least a portion of the second resin are configured to be pyrolyzed from the porosity gradient fibrous preform to create a path through the porosity gradient fibrous preform for infiltration of a fluid,
wherein optionally, the fluid infiltration includes chemical vapor infiltration.

6. The porosity gradient fibrous preform of any preceding claim, wherein a char yield of the first resin is greater than a char yield of the second resin.

7. The porosity gradient fibrous preform of any of claims 2 to 6, further comprising a third fabric-resin layer having a third plurality of fibers and a third resin, the third fabric-resin layer being positioned further outward from the center of the porosity gradient fibrous preform than the second fabric-resin layer, wherein the third resin is configured to be pyrolyzed to create a third porosity, and wherein the third porosity is greater than the second porosity.

8. The porosity gradient fibrous preform of any preceding claim, wherein a fiber volume of the first fabric-resin layer is equal to that of the second fabric-resin layer, and the percentage of the fiber volume is at least 25% by volume of the porosity gradient fibrous preform; and/or
wherein the resin comprises of at least one of a thermoplastic or a thermoset resin.

9. A manufacturing method, comprising:
forming a porosity gradient fibrous preform by:
arranging a plurality of fabric-resin layers, each comprising a plurality of fibers and a resin, wherein a fiber volume of the plurality of fibers for each fabric-resin layer is uniform throughout the plurality of fabric-resin layers; and
pyrolyzing the resin to create a sequentially increasing porosity from a center of the porosity gradient fibrous preform toward an outer surface of the porosity gradient fibrous preform.

10. The manufacturing method of claim 9, further comprising pyrolyzing the resin from the porosity gradient fibrous preform to create a path through the porosity gradient fibrous preform for infiltration of a fluid.

11. The manufacturing method of claim 10, wherein, after pyrolyzing the resin from the porosity gradient fibrous preform, a porosity of the porosity gradient fibrous preform sequentially increases from the center of the porosity gradient fibrous preform toward the outer surface of the porosity gradient fibrous preform, and/or
further comprising mixing a carbon powder with the resin, a volume of the carbon powder decreases from the center of the porosity gradient fibrous preform toward the outer surface of the porosity gradient fibrous preform.

12. The manufacturing method of any of claims 9 to 11, wherein a composition of the resin varies among the plurality of fabric-resin layers.

13. The manufacturing method of any of claims 9 to 12, wherein arranging the plurality of fabric-resin layers includes positioning a second fabric-resin layer over a first fabric-resin layer having a first portion of the plurality of fibers and a first portion of the resin, the second fabric-resin layer having a second portion of the plurality of fibers and a second portion of the resin, the second fabric-resin layer being positioned further outward from the center of the porosity gradient fibrous preform than the first fabric-resin layer.

14. The manufacturing method of claim 13, wherein the first portion of the resin has a first composition and the second portion of the resin has a second composition that is different from the first composition; and/or
the percentage of the fiber volume is at least 25% by volume of the porosity gradient fibrous preform, and/or
wherein the first portion of the resin includes a polyamide and the second portion of the resin includes at least one of an epoxy, a bismaleimide, and a phenolic.

15. A manufacturing method, comprising:
forming a porosity gradient fibrous preform by:
arranging a plurality of fabric-resin layers, each comprising a plurality of fibers and a resin, wherein a fiber volume of the plurality of fibers for each fabric-resin layer is uniform throughout the plurality of fabric-resin layers;
mixing a carbon powder with the resin, a volume of the carbon powder decreases from a center of the porosity gradient fibrous preform toward the outer surface of the porosity gradient fibrous preform; and
pyrolyzing the resin from the porosity gradient fibrous preform to create a sequentially increasing porosity from the center of the porosity gradient fibrous preform toward an outer surface of the porosity gradient fibrous preform.
